# EUROPÄISCHE PATENTSCHRIFT

(11) **EP 3 063 191 B1**
(45) Veröffentlichungstag und Bekanntmachung des Hinweises auf die Patenterteilung: **27.09.2017**
(21) Anmeldenummer: 14780872.9
(22) Anmeldetag: 06.10.2014
(51) Int. Cl.: C08F 228/02, C08F 2/10

(54) **POLYMERE ENTHALTEND S-VINYLTHIOALKANOLE**
POLYMERS CONTAINING S-VINYLTHIOALKANOLES
POLYMÈRES CONTENANT DU S-VINYLTHIOALKANOLE

(30) Priorität: 30.10.2013 EP 13190780
(43) Veröffentlichungstag der Anmeldung: 07.09.2016
(73) Patentinhaber: BASF SE, 67056 Ludwigshafen am Rhein (DE)
(72) Erfinder: FLEISCHHAKER, Friederike, 67065 Ludwigshafen (DE); SCHADE, Christian, 67063 Ludwigshafen (DE)
(74) Vertreter: BASF IP Association
(86) Internationale Anmeldenummer: PCT/EP2014/071321
(87) Internationale Veröffentlichungsnummer: WO 2015/062814

(56) Entgegenhaltungen:
- DE-A1- 2 128 681
- US-A- 2 933 479

## Beschreibung

Die vorliegende Erfindung betrifft Verfahren zur Herstellung von Polymeren enthaltend S-Vinylthioalkanol als Monomer. Gegenstände der Erfindung sind weiterhin Polymere hergestellt gemäß solchen Verfahren und spezielle Copolymere. Weitere Gegenstände der Erfindung sind die Verwendungen solcher Polymere und Mischungen enthaltend solche Polymere.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils konkret angegebenen Kombination, sondern auch in anderen Kombinationen verwendbar sind, ohne den Rahmen der Erfindung zu verlassen. Bevorzugt beziehungsweise ganz bevorzugt sind insbesondere auch diejenigen Ausführungsformen der vorliegenden Erfindung, in denen alle Merkmale des erfindungsgemäßen Gegenstandes die bevorzugten beziehungsweise ganz bevorzugten Bedeutungen haben.

Reaktive Monomere mit Alkoxylatsubstituenten finden in den unterschiedlichsten technischen Gebieten Anwendungen, beispielsweise als Betonverflüssiger oder als Bestandteil von Anstrichen, Farben und Lacken. Ein bekanntes reaktives Monomer ist 4-Hydroxybutylvinylether (HBVE). Die radikalische Homopolymerisation von Vinylethern führt in der Regel nur zu Oligomeren. Wasser ist als Lösungsmittel wegen der hohen Hydrolyseanfälligkeit der Vinylether nicht als Lösungsmittel zu gebrauchen.

S-Vinylthioalkanole eignen sich ebenfalls als Reaktive Monomere mit Alkoxylatsubstituenten.

Copolymere von S-Vinyl-2-thioethan-1-ol mit N-vinylpyrrolidon sind aus Vorob'eva et al., Vysokomolekulyarne Soedineniya Ser. B, 46, 1239-1243 (2004) bekannt. Diese Copolymere werden in Masse oder in Lösungsmitteln hergestellt. Als Lösungsmittel ist auch Wasser genannt.

Copolymere von S-Vinyl-2-thioethan-1-ol mit N,N-dimethyl-N,N-diallylammonium-chlorid sind aus Vorob'eva et al., Vysokomolekulyarne Soedineniya Ser. B, 46, 364-368 (2004) bekannt.

Copolymere von S-Vinyl-2-thioethan-1-ol mit Methyl-Methacrylat, Acrylamid und Acrylonitrile, die in Masse hergestellt werden, sind aus der DE 2055893 A1 bekannt.

Copolymere von S-Vinyl-2-thioethan-1-ol mit Styrol und Acrylaten, hergestellt in organischen Lösungsmitteln sind aus der DE 2128681 A1 bekannt.

Weiterhin bekannt sind aus Vorob'eva et al., Vysokomolekulyarne Soedineniya Ser. B, 45, 700-704 (2003) Copolymere mit Acrylamid, Styrol und Methyl-Methacrylate, die in DMSO als Lösungsmittel hergestellt werden.
Bei den Polymeren des Standes der Technik treten Probleme bei der Herstellung auf. Beispielsweise zeigen Vinylether bei der Polymerisation oder Copolymerisation keine besonders hohe Reaktivität und führen auch zu einigen Nebenreaktionen. Einige der Vinylether, beispielsweise HBVE, sind insbesondere im sauren Milieu nur bedingt hydrolysestabil.

Aufgabe der vorliegenden Erfindung war es Polymere bereit zu stellen, die die oben genannten Nachteile nicht aufweisen. Eine Teilaufgabe der Erfindung war es für eine effiziente Polymerisationsreaktion reaktive Monomere mit Alkoxylatsubstituenten zu entwickeln. Als eine weitere Teilaufgabe der vorliegenden Erfindung sollten solche Verbindungen bereitgestellt werden, die sowohl als Monomer, als auch einpolymerisiert in das Polymer eine erhöhte Hydrolysestabilität aufweisen.

Diese und andere Aufgaben werden, wie aus dem Offenbarungsgehalt der vorliegenden Erfindung ersichtlich, durch die verschiedenen Ausführungsformen der Erfindung gelöst, insbesondere durch Verfahren zur Herstellung von Polymeren enthaltend S-Vinylthioalkanol als Monomer durch radikalische Polymerisation, wobei die Polymerisation in wässriger Lösung durchgeführt wird, unter der Maßgabe, dass zur Herstellung der Polymere kein N-Vinylpyrrolidon als Monomer eingesetzt wird, bevorzugt in einer wässrigen Lösung deren Lösungsmittelgemisch mindestens 50 Gew.-% Wasser enthält, besonders bevorzugt mindestens 80 Gew.-% Wasser, insbesondere 100 Gew.-% Wasser, jeweils bezogen auf das Lösemittelgemisch.

S-Vinylthioalkanole sind kommerziell erhältlich oder können beispielsweise aus Ethin (Acetylen) und Thioalkoholen nach dem Reppe Verfahren oder anderen dem Fachmannn bekannten Verfahren hergestellt werden.

In einer bevorzugten Ausführungsform des erfindungsgemäßen Verfahrens werden als S-Vinylthioalkanol ungesättigte Verbindungen der allgemeinen Formel (I) eingesetzt 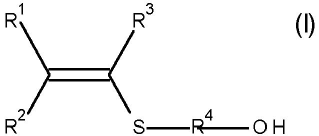 wobei
- R¹, R², R³: unabhängig voneinander, gleich oder verschieden, H, CH₃, bevorzugt H,
- R⁴: lineares oder verzweigtes C₁-C₃₀-Alkylen, bevorzugt C₂-C₁₀-Alkylen, besonders bevorzugt C₂-C₄-Alkylen, insbesondere -CH₂-CH₂-,
bedeuten.

Ausdrücke der Form Cₐ-C_{b} bezeichnen im Rahmen dieser Erfindung chemische Verbindungen oder Substituenten mit einer bestimmten Anzahl von Kohlenstoffatomen. Die Anzahl an Kohlenstoffatomen kann aus dem gesamten Bereich von a bis b, einschließlich a und b gewählt werden, a ist mindestens 1 und b immer größer als a. Eine weitere Spezifizierung der chemischen Verbindungen oder der Substituenten erfolgt durch Ausdrücke der Form Cₐ-C_{b}-V. V steht hierbei für eine chemische Verbindungsklasse oder Substituentenklasse, beispielsweise für Alkylverbindungen oder Alkylsubstituenten.

Im Einzelnen haben die für die verschiedenen Substituenten angegebenen Sammelbegriffe folgende Bedeutung:
C₁-C₃₀-Alkylen: geradkettige oder verzweigte Kohlenwasserstoffreste mit 1 bis 30 Kohlenstoffatomen, beispielsweise C₁-C₁₀-Alkylen oder C₁₁-C₂₀-Alkylen, bevorzugt C₁-C₁₀-Alkylen, insbesondere Methylen, Dimethylen, Trimethylen, Tetramethylen, Pentamethylen oder Hexamethylen.

Besonders bevorzugt wird der S-Vinylthioalkanol gewählt aus der Gruppe bestehend aus S-Vinyl-2-thioethan-1-ol, S-Vinyl-2-thiopropan-1-ol, S-Vinyl-1-thiopropan-2-ol, S-Vinyl-2-thiobutan-1-ol, S-Vinyl-1-thiobutan-2-ol, S-Vinyl-2-thiopentan-1-ol, S-Vinyl-1-thiopentan-2-ol, S-Vinyl-2-thiocyclohexan-1-ol, S-Vinyl-2-thio-(C₁₂-C₂₂)-1-ol, S-Vinyl-1-thio-(C₁₂-C₂₂)-2-ol, S-Vinyl-1-thiopropan-2,3-diol, S-Vinyl-2-thiopropan-1,3-diol, 1-Phenyl-S-vinyl-1-thio-ethan-2-ol, 1-Phenyl-S-vinyl-2-thioethan-1-ol. Bevorzugt wird der S-Vinylthioalkanol gewählt aus der Gruppe bestehend aus S-Vinyl-2-thioethan-1-ol, S-Vinyl-1-thiopropan-2-ol, S-Vinyl-1-thiopropan-2,3-diol, besonders bevorzugt ist der S-Vinylthioalkanol S-Vinyl-2-thioethan-1-ol.

In einer weiteren bevorzugten Ausführungsform des erfindungsgemäßen Verfahrens wird mindestens ein weiteres von einem S-Vinylthioalkanol verschiedenes Monomer zur Herstellung der Polymere eingesetzt, wie bereits erwähnt unter der Maßgabe, dass zur Herstellung der Polymere kein N-Vinylpyrrolidon als Monomer eingesetzt wird.

Bevorzugt wird als mindestens ein weiteres Monomer ein monoethylenisch ungesättigtes wasserlösliches Monomer, ausgenommen Vinylpyrrolidon, eingesetzt. Besonders bevorzugt wird das ein monoethylenisch ungesättigte wasserlösliche Monomer gewählt aus der Gruppe bestehend aus monoethylenisch ungesättigtes wasserlösliches Monomer mit einer oder mehrerer Säuregruppen, monoethylenisch ungesättigtes wasserlösliches Monomer mit einer oder mehrerer Estergruppen, monoethylenisch ungesättigtes wasserlösliches Monomer mit einer oder mehrerer Amidgruppen, monoethylenisch ungesättigtes wasserlösliches Monomer mit einer oder mehrerer Anhydridgruppen, monoethylenisch ungesättigtes wasserlösliches Monomer mit einer oder mehrerer quarternierter Stickstoffgruppen, monoethylenisch ungesättigtes wasserlösliches Monomer mit einer oder mehrerer Heteroaromatengruppen. Insbesondere bevorzugt sind als monoethylenisch ungesättigte wasserlösliche Monomere (Meth)acrylsäure, Maleinsäure, Maleinsäureanhydrid, Itaconsäure, Vinylphosphonsäure, 2-Acrylamido-2-methylpropansulfonsäure, Vinylimidazol, Tri(m)ethylammonium-ethyl-(meth)acrylat mit Gegenion Chlorid, Methylsulfat, Tri(m)ethylammonium-Ethyl/Propyl-(meth)acrylamid mit Gegenion Chlorid, Methylsulfat, Methyl-, Alkyl-(PEG)x-, (x ist eine Zahl von 200 bis 10000), Hydroxyethyl-, Hydroxypropyl-, Dimethylaminoethyl-, Ureido(meth)acrylat, (Meth)Acrylamid, Dimethyl(meth)acrylamid, Dimethylaminopropyl(meth)acrylamid, Methacrylamido-ethyl-ethylenharnstoff oder N-Vinylformamid.

In einer besonders bevorzugten Ausführungsform des erfindungsgemäßen Verfahrens wird als monoethylenisch ungesättigtes Monomer Acrylsäure eingesetzt. Insbesondere werden neben S-Vinyl-2-thioethan-1-ol und Acrylsäure keine weiteren Monomere zur Herstellung der Polymere eingesetzt.

In einer weiteren Ausführungsform des erfindungsgemäßen Verfahrens weisen die hergestellten Polymere eine obere kritische Lösungstemperatur (upper critical solution temperature, UCST) in Wasser von 0 bis 99 °C auf, bevorzugt von Raumtemperatur (21 °C) bis 90 °C, insbesondere von 30 bis 80 °C.

Ein weiterer Vorteil des erfindungsgemäßen Verfahrens ist, dass es gestattet Polymere bzw. Copolymere mit einer gut kontrollierbaren UCST herzustellen, insbesondere einer UCST in Wasser. Insbesondere trifft dies auf Copolymere bestehend aus Acrylsäure und S-Vinyl-2-thioethan-1-ol zu. Die Höhe der UCST wird hierbei über den Acrylsäureanteil eingestellt. Ein Polymer aus S-Vinyl-2-thioethan-1-ol/Acrylsäure (50/50 - Molverhältnis) weist ein UCST in Wasser von ca. 50°C auf, ein Polymer aus S-Vinyl-2-thioethan-1-ol/Acrylsäure (40/60 - Molverhältnis) weist eine UCST von ca. 37°C auf und ein Polymer aus S-Vinyl-2-thioethan-1-ol/Acrylsäure (20/80 - Molverhältnis) ist komplett in Wasser löslich. Ein Homopolymer aus S-Vinyl-2-thioethan-1-ol ist in Wasser nicht löslich, sondern liegt im Gegensatz hierzu nur als Suspension in Wasser vor.

Die Menge an S-Vinylthioalkanol, die im erfindungsgemäßen Verfahren zum Einsatz kommt, kann je nach Anwendung des Polymeren über einen weiten Bereich variieren. Im Rahmen des erfindungsgemäßen Verfahrens werden in der Regel von 1 bis 99 Mol-% S-Vinylthioalkanol, bevorzugt von 20 bis 80 Mol-%, besonders bevorzugt von 30 bis 70 Mol-%, bezogen auf die Gesamtmenge an Monomeren eingesetzt.

Entsprechend werden im Rahmen des erfindungsgemäßen Verfahrens von 1 bis 99 Mol-% S-Vinyl-2-thioethan-1-ol, bevorzugt 20 bis 80 Mol%, besonders bevorzugt 30 bis 70 Mol% und von 99 bis 1 Mol-% bevorzugt 80 bis 20 Mol%, besonders bevorzugt 70 bis 30 Mol% weitere Monomeren bezogen auf die Gesamtmenge an Monomeren eigesetzt. Insbesondere werden von 1 bis 99 Mol-% S-Vinyl-2-thioethan-1-ol, bevorzugt von 20 bis 80 Mol-%, besonders bevorzugt von 30 bis 70 Mol-% und von 99 bis 1 Mol-% bevorzugt von 80 bis 20 Mol-%, besonders bevorzugt von 70 bis 30 Mol-% Acrylsäure bezogen auf die Gesamtmenge an Monomeren eingesetzt.

Ein weiterer Gegenstand der Erfindung sind Polymere, hergestellt nach dem erfindungsgemäßen Verfahren, bevorzugt hydrolysestabile Polymere.
Ein weiterer Gegenstand der Erfindung sind Copolymere, bevorzugt hydrolysestabile Copolymere, bestehend aus S-Vinyl-2-thioethan-1-ol und einem oder mehreren ethylenisch ungesättigten Monomeren gewählt aus der Gruppe bestehend aus Acrylsäure, Itaconsäure, Maleinsäure, Maleinsäureanhydrid, Vinylphosphonäure. Bevorzugt sind Copolymere bestehend aus S-Vinyl-2-thioethan-1-ol und Acrylsäure.

Ein weiterer Gegenstand der Erfindung sind Mischungen, bevorzugt wässrige Zusammensetzungen, enthaltend die oben genannten Polymere, die nach dem erfindungsgemäßen Verfahren hergestellt wurden. Bevorzugt sind wässrige Zusammensetzungen die mindestens 50 Gew.-% Wasser enthalten, besonders bevorzugt mindestens 80 Gew.-% Wasser, insbesondere 100 Gew.-% Wasser bezogen auf die Gesamtmenge an Lösemittel. Diese Mischungen bzw. wässrigen Zusammensetzungen weisen einen pH von 2 bis 10, besonders bevorzugt einen pH von 4 bis 8, insbesondere einen pH von 5 bis 7 auf.

Ein weiterer Gegenstand der Erfindung ist die Verwendung der oben genannten Polymere, die nach dem erfindungsgemäßen Verfahren hergestellt wurden, oder von Mischungen, bevorzugt wässrige Zusammensetzungen, enthaltend solche Polymere als Betonverflüssiger, Netzmittel, in der Kosmetik, als Klebstoffbestandteil, in der Emulsionspolymerisation, zur Metalloberflächenbehandlung, in Beschichtungsanwendungen, in Lacken, in Waschmitteln, in Spülmitteln, als Verkapselungsmaterial oder Umhüllungsmaterial.

Die vorliegende Erfindung stellt reaktive hydrolysestabile S-Vinylthioalkanole bereit, die sich effizient zu hydrolysestabilen Polymeren und Copolymeren umsetzen lassen. Die Polymere und Copolymere sind ebenfalls weitgehend stabil gegen Basen und Säuren bezüglich einer Hydrolyse an der Hydroxyalkylgruppe. Die S-Vinylthioalkanole eignen sich daher beispielsweise als hydrolysestabiler Ersatz von Hydroxyalkyl(meth)acrylaten.

Beispielsweise liegt Hydroxyethylacrylat bei pH 13 in Wasser nach 60 min zu ca. 70% hydrolysiert vor, S-Vinyl-2-thioethan-1-ol hydrolisiert unter diesen basischen Bedingungen kaum.

Insbesondere sind diese Monomere bei der radikalischen Polymerisation in wässiger Lösung sowie die entstehenden Polymere bei der Lagerung in wässriger Lösung stabil. Analoge Vinyletheralkohole sind nämlich nicht hydrolysestabil beim radikalischen Polymerisieren in Wasser - in Gegenwart von Säuren entsteht Acetaldehyd und das entsprechende Diol, jedoch kein Polymer.

Auch sind die S-Vinylthioalkanole sogar hydrolysestabil beim Copolymerisieren (sogar mit Säuren wie Acrylsäure oder Itaconsäure) und Lagern der Copolymere in wässriger Lösung.

Die Erfindung wird durch die Beispiele näher erläutert ohne dass die Beispiele den Gegenstand der Erfindung einschränken.

### Beispiele:

### Messmethoden:

### K-Werte:

Die K-Werte wurden nach H. Fikentscher, Cellulose-Chemie, Bd. 13, Seiten 58 bis 64 und 71 bis 74 (1932) in 1 Gew.-%iger wässriger bzw. methanolischer Lösung bei 25°C gemessen.

### GPC-Messung:

Die GPC Messungen wurden in N,N-Dimethylacetamid (DMAC) mit Polymethylmethacrylat (PMMA) (Molekulargewichtsverteilung von von M = 800 bis M = 1.820.000) als Standard durchgeführt. Verwendete Säulen:

| Säulen | | Trennmaterial | Ausschlußgrenze | Bezeichnung |
|---|---|---|---|---|
| Durchmesser | Länge | | | |
| mm | cm | | g/mol | |
| | | | | |
| 8 | 5 | Polyester copolymer | | GRAM Vorsäule |
| 8 | 30 | Polyester copolymer | 100-10.000 | GRAM 30A |
| 8 | 30 | Polyester copolymer | 1000 -1.000.000 | GRAM 1000A |
| 8 | 30 | Polyester copolymer | 1000 -1.000.000 | GRAM 1000A |

### Beispiel 1: Herstellung S-Vinyl-2-thioethan-1-ol /Acrylsäure Copolymer (Verhältnis 50 mol/50 mol)

In einem Reaktorgefäß, das mit Rührer, Temperaturkontrolle, Stickstoffeinleitung und mehreren Zulaufstellen versehen war, wurden 58,0g entionisiertes Wasser, 1,3 g von Zulauf 1, 1,2 g von Zulauf 2 und 1,1g von Zulauf 3 vorgelegt.
Zulauf 1: 26g S-Vinyl-2-thioethan-1-ol.
Zulauf 2: 18g Acrylsäure und 6g entionisiertes Wasser.
Zulauf 3: 1,32 g Azo-Initiator (2,2'-Azobis[2-(2-imidazolin-2-yl)propane]dihydrochlorid, Wako VA-044) und 20g entionisiertes Wasser.

Die Vorlage wurde 15 Minuten mit Stickstoff begast und unter Stickstoffatmosphäre auf 70 °C erhitzt. Anschließend wurde innerhalb von 3 Stunden der Rest von Zulauf 1 und von Zulauf 2 sowie innerhalb von 4 Stunden der Rest von Zulauf 3 zugetropft.

Danach wurde 2 Stunden bei 70°C gerührt. Man erhielt eine hellgelbe, klare Polymerlösung mit einem Feststoffgehalt von 29,8% und einem K-Wert von 23,2 (1 % in Methanol).

Per GPC wurde Mn zu 3348 g/mol, Mw zu 6026 g/mol und PDI (Mw/Mn) zu 1,8 bestimmt (Eichkurve für PMMA).

Weder Restmonomer noch Hydrolyseprodukte von S-Vinyl-2-thioethan-1-ol konnten per ¹H-NMR Spektroskopie detektiert werden. Zur Detektion potentieller Hydrolyseprodukte wurden zusätzlich ¹H-NMR-Aufstockversuche mit 2-Thioethan-1-ol sowie Ethylenglycol durchgeführt.

Die obere kritische Lösungstemperatur (upper critical solution temperature, UCST) des Copolymers in Wasser betrug ca. 50°C.

### Beispiel 2: Herstellung S-Vinyl-2-thioethan-1-ol /Acrylsäure Copolymer (Verhältnis 40 mol/60 mol)

In einem Reaktorgefäß, das mit Rührer, Temperaturkontrolle, Stickstoffeinleitung und mehreren Zulaufstellen versehen war, wurden 63,8g entionisiertes Wasser, 1,5 g von Zulauf 1, 2,5 g von Zulauf 2 und 1,6g von Zulauf 3 vorgelegt.
Zulauf 1: 29,2g S-Vinyl-2-thioethan-1-ol.
Zulauf 2: 30,3g Acrylsäure und 20,0g entionisiertes Wasser.
Zulauf 3: 1,8 g Wako VA-044 und 30g entionisiertes Wasser.

Die Vorlage wurde 15 Minuten mit Stickstoff begast und unter Stickstoffatmosphäre auf 70 °C erhitzt. Anschließend wurde innerhalb von 3 Stunden der Rest von Zulauf 1 und von Zulauf 2 sowie innerhalb von 4 Stunden der Rest von Zulauf 3 zugetropft.

Danach wurde 2 Stunden bei 70°C gerührt. Man erhielt eine hellgelbe, klare Polymerlösung mit einem Feststoffgehalt von 27,6% und einem K-Wert von 24,7 (1 % in Methanol).

Weder Restmonomer noch Hydrolyseprodukte von S-Vinyl-2-thioethan-1-ol konnten per ¹H-NMR Spektroskopie detektiert werden. Zur Detektion potentieller Hydrolyseprodukte wurden zusätzlich ¹H-NMR-Aufstockversuche mit 2-Thioethan-1-ol sowie Ethylenglycol durchgeführt.

Die obere kritische Lösungstemperatur (upper critical solution temperature, UCST) des Copolymers in Wasser betrug ca. 37°C.

### Beispiel 3: Herstellung S-Vinyl-2-thioethan-1-ol Homopolymer

In einem Reaktorgefäß, das mit Rührer, Temperaturkontrolle, Stickstoffeinleitung und mehreren Zulaufstellen versehen war, wurden 29,8g entionisiertes Wasser, 30,0g Ethanol, 2,0 g von Zulauf 1 und 1,1g von Zulauf 2 vorgelegt.
Zulauf 1: 41,7g S-Vinyl-2-thioethan-1-ol.
Zulauf 2: 1,25 g Wako VA-044 und 20g entionisiertes Wasser.
Zulauf 3: 0,83g Wako VA-044 und 13,33g Wasser.

Die Vorlage wurde 15 Minuten mit Stickstoff begast und unter Stickstoffatmosphäre auf 70 °C erhitzt. Anschließend wurd innerhalb von 3 Stunden der Rest von Zulauf 1 sowie innerhalb von 4 Stunden der Rest von Zulauf 2 zugetropft. Danach wurd 2 Stunden bei 70°C gerührt. Anschließend wurd Zulauf 3 innerhalb von 45 min zugetropft und 2 Stunden bei 70°C gerührt.

Man erhielt ein hellgelbe, klare Polymerlösung mit einem Feststoffgehalt von 28,3% und einem K-Wert von 23,3 (1 % in Methanol).

Der Restmonomergehalt betrug ca. 2 mol% bezogen auf die eingesetzte Gesamtmonomermenge. Per GPC wurde Mn auf 6718 g/Mol, Mw auf 16680 g/mol und der PDI auf 2,5 bestimmt. (Eichkurve für PMMA).

### Beispiel 4: Herstellung S-Vinyl-2-thioethan-1-ol /Acrylsäure Copolymer (Verhältnis 10 mol/90 mol)

In einem Reaktorgefäß, das mit Rührer, Temperaturkontrolle, Stickstoffeinleitung und mehreren Zulaufstellen versehen war, wurden 73,6g entionisiertes Wasser, 6,0 g von Zulauf 1 und 2,25 g von Zulauf 2 vorgelegt.
Zulauf 1: 77,82g Acrylsäure, 12,50g S-Vinyl-2-thioethan-1-ol, 30,0g entionisiertes Wasser.
Zulauf 2: 5,42 g Azoinitiator (2,2'-Azobis(2-methylpropionamidine)dihydrochloride, Wako V-50) und 40,0g entionisiertes Wasser.

Die Vorlage wurde 15 Minuten mit Stickstoff begast und unter Stickstoffatmosphäre auf 88 °C erhitzt. Anschließend wurde innerhalb von 3 Stunden der Rest von Zulauf 1 sowie innerhalb von 4 Stunden der Rest von Zulauf 2 zugetropft. Danach wurde 2 Stunden bei 88°C gerührt.

Man erhielt eine hellgelbe, klare Polymerlösung mit einem Feststoffgehalt von 40,6% und einem K-Wert von 12,7 (1% in Wasser).

Weder Restmonomer noch Hydrolyseprodukte von S-Vinyl-2-thioethan-1-ol konnten per ¹H-NMR Spektroskopie detektiert werden. Zur Detektion potentieller Hydrolyseprodukte wurden zusätzlich ¹H-NMR-Aufstockversuche mit 2-Thioethan-1-ol sowie Ethylenglycol durchgeführt.

### Beispiel 5: Herstellung S-Vinyl-2-thioethan-1-ol /Acrylsäure Copolymer (Verhältnis 20 mol/80 mol)

In einem Reaktorgefäß, das mit Rührer, Temperaturkontrolle, Stickstoffeinleitung und mehreren Zulaufstellen versehen war, wurden 79,75g entionisiertes Wasser, 6,2 g von Zulauf 1 und 2,3 g von Zulauf 2 vorgelegt.
Zulauf 1: 69,18g Acrylsäure, 25,0g S-Vinyl-2-thioethan-1-ol, 30,0g entionisiertes Wasser.
Zulauf 2: 5,65 g Wako V-50 und 40,0g entionisiertes Wasser.

Die Vorlage wurde 15 Minuten mit Stickstoff begast und unter Stickstoffatmosphäre auf 88 °C erhitzt. Anschließend wurde innerhalb von 3 Stunden der Rest von Zulauf 1 sowie innerhalb von 4 Stunden der Rest von Zulauf 2 zugetropft. Danach wurd 2 Stunden bei 88°C gerührt.

Man erhielt eine hellgelbe, klare Polymerlösung mit einem Feststoffgehalt von 39,2% und einem K-Wert von 10,5 (1 % in Wasser).

Weder Restmonomer noch Hydrolyseprodukte von S-Vinyl-2-thioethan-1-ol konnten per ¹H-NMR Spektroskopie detektiert werden. Zur Detektion potentieller Hydrolyseprodukte wurden zusätzlich ¹H-NMR-Aufstockversuche mit 2-Thioethan-1-ol sowie Ethylenglycol durchgeführt.

### Beispiel 6: Herstellung S-Vinyl-2-thioethan-1-ol /Acrylsäure / Itaconsäure / Vinylphosphonsäure Copolymer (Verhältnis 5 mol / 55 mol / 30 mol / 10 mol)

In einem Reaktorgefäß, das mit Rührer, Temperaturkontrolle, Stickstoffeinleitung und mehreren Zulaufstellen versehen war, wurden 42,67g entionisiertes Wasser, 9,32 g Vinylphosphonsäure (95%ig) und 32,0 g Itaconsäure vorgelegt. Die Vorlage wurd 15 Minuten mit Stickstoff begast und unter Stickstoffatmosphäre auf 98 °C erhitzt. Anschließend wurd innerhalb von 5 Stunden 32,5g Acrylsäure, 4,3g S-Vinyl-2-thioethan-1-ol und 30,0g entionisiertes Wasser sowie innerhalb von 6 Stunden 3,1g Wako V-50 und 48,0 g entionisiertes Wasser zugetropft. Danach wurde 2 Stunden bei 98°C gerührt.

Man erhielt eine gelbe, klare Polymerlösung mit einem Feststoffgehalt von 39,9% und einem K-Wert von 13,0 (1 % in Wasser). 2,9 mol% Vinylphosphonsäure bezogen auf die Gesamtmenge an eingesetzter Vinylphosphonsäure konnten im ¹H- und ³¹P-NMR Spektrum detektiert werden.

### Beispiel 7: Anwendungsbeispiele

Die Copolymere aus Beispiel 4 und 5 wurden zur Beschichtung von Prüfblechen aus heiß verzinktem Stahl (Gardobond OE HDG 3; 105 x 190 m) eingesetzt.

Als Vorbehandlung wurden die Prüfbleche in einer mild alkalischen Reinigerlösung (Surtech 133, Fa. Surtech) für 30 Sekunden getaucht, sofort mit voll entsalztem Wasser abgespült und anschließend mit Stickstoff getrocknet. Die gereinigten Bleche wurden für 1 Sekunde in eine 25 Gew.-%ige wässrige Lösung des Copolymeren getaucht, mit einem Walzensystem abgequetscht und für 12 Sekunden bei 160°C im Umluft-Trockenschrank getrocknet. Die Peak-Metal-Temperature (PMT) überstieg hierbei nicht 50°C.

Die so erhaltenen Prüfbleche wurden hinsichtlich ihrer Korrosionsbeständigkeit in einem Salzsprühtest nach DIN EN ISO 9227 untersucht.

| | |
|---|---|
| Polymer | korrodierte Fläche nach Salzsprühtest |
| keine Beschichtung | 100 % (vollständig korrodiert) |
| AS/ S-Vinyl-2-thioethan-1-ol 90/10 | ca. 30 % |
| AS/ S-Vinyl-2-thioethan-1-ol 80/20 | ca. 10 % |

Die Daten belegen die passivierende Wirkung durch die erfindungsgemäßen Copolymere.

## Patentansprüche

1. Verfahren zur Herstellung von Polymeren enthaltend S-Vinylthioalkanol als Monomer durch radikalische Polymerisation, **dadurch gekennzeichnet, dass** die Polymerisation in wässriger Lösung durchgeführt wird, unter der Maßgabe, dass zur Herstellung der Polymere kein N-Vinylpyrrolidon als Monomer eingesetzt wird und dass mindestens ein weiteres von einem S-Vinylthioalkanol verschiedenes Monomer eingesetzt wird, wobei das weitere Monomer ein monoethylenisch ungesättigtes wasserlösliches Monomer, ausgenommen Vinylpyrrolidon, ist.

2. Verfahren nach Anspruch 1, **dadurch gekennzeichnet, dass** als S-Vinylthioalkanol ungesättigte Verbindungen der allgemeinen Formel (I) eingesetzt werden 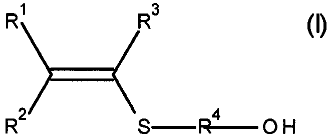 wobei
R¹, R², R³ unabhängig voneinander, gleich oder verschieden, H, CH₃,
R⁴ lineares oder verzweigtes C₁-C₃₀-Alkylen,
bedeuten.

3. Verfahren nach Anspruch 1 oder 2, **dadurch gekennzeichnet, dass** der S-Vinylthioalkanol gewählt wird aus der Gruppe bestehend aus S-Vinyl-2-thioethan-1-ol, S-Vinyl-2-thiopropan-1-ol, S-Vinyl-1-thiopropan-2-ol, S-Vinyl-2-thiobutan-1-ol, S-Vinyl-1-thiobutan-2-ol, S-Vinyl-2-thiopentan-1-ol, S-Vinyl-1-thiopentan-2-ol, S-Vinyl-2-thiocyclohexan-1-ol, S-Vinyl-2-thio-(C₁₂-C₂₂)-1-ol, S-Vinyl-1-thio-(C₁₂-C₂₂)-2-ol, S-Vinyl-1-thiopropan-2,3-diol, S-Vinyl-2-thiopropan-1,3-diol, 1-Phenyl-S-vinyl-1-thio-ethan-2-ol, 1-Phenyl-S-vinyl-2-thioethan-1-ol.

4. Verfahren nach Anspruch 3, **dadurch gekennzeichnet, dass** mindestens ein Monomer gewählt wird aus der Gruppe bestehend aus monoethylenisch ungesättigtes wasserlösliches Monomer mit einer oder mehrerer Säuregruppen, monoethylenisch ungesättigtes wasserlösliches Monomer mit einer oder mehrerer Estergruppen, monoethylenisch ungesättigtes wasserlösliches Monomer mit einer oder mehrerer Amidgruppen, monoethylenisch ungesättigtes wasserlösliches Monomer mit einer oder mehrerer Anhydridgruppen, monoethylenisch ungesättigtes wasserlösliches Monomer mit einer oder mehrerer quarternierter Stickstoffgruppen, monoethylenisch ungesättigtes wasserlösliches Monomer mit einer oder mehrerer Heteroaromatengruppen.

5. Verfahren nach Anspruch 4, **dadurch gekennzeichnet, dass** als mindestens ein monoethylenisch ungesättigtes Monomer Acrylsäure eingesetzt wird.

6. Verfahren nach Anspruch 5, **dadurch gekennzeichnet, dass** neben S-Vinyl-2-thioethan-1-ol und Acrylsäure keine weiteren Monomere eingesetzt werden.

7. Verfahren nach den Ansprüchen 1 bis 6, **dadurch gekennzeichnet dass** die entstehenden Polymere eine obere kritische Lösungstemperatur in Wasser von 0 bis 99 °C aufweisen.

8. Verfahren nach den Ansprüchen 1 bis 7, **dadurch gekennzeichnet dass** von 1 bis 99 Mol-% S-Vinylthioalkanol bezogen auf die Gesamtmenge an Monomeren eingesetzt wird.

9. Verfahren nach den Ansprüchen 3 bis 7, **dadurch gekennzeichnet dass** von 1 bis 99 Mol-% S-Vinyl-2-thioethan-1-ol und von 99 bis 1 Mol-% weitere Monomeren bezogen auf die Gesamtmenge an Monomeren eigesetzt werden.

10. Verfahren nach Anspruch 6 **dadurch gekennzeichnet dass** von 1 bis 99 Mol-% S-Vinyl-2-thioethan-1-ol und von 99 bis 1 Mol-% Acrylsäure bezogen auf die Gesamtmenge an Monomeren eigesetzt wird.

11. Polymere enthaltend S-Vinylthioalkanol als Monomer und mindestens ein weiteres von einem S-Vinylthioalkanol verschiedenes Monomer, wobei das weitere Monomer ein monoethylenisch ungesättigtes wasserlösliches Monomer, ausgenommen Vinylpyrrolidon, ist, hergestellt nach Verfahren gemäß den Ansprüchen 1 bis 10.

12. Copolymer, bestehend aus S-Vinyl-2-thioethan-1-ol und einem oder mehreren ethylenisch ungesättigten Monomeren gewählt aus der Gruppe bestehend aus Acrylsäure, Itaconsäure, Maleinsäure, Maleinsäureanhydrid und Vinylphosphonäure.

13. Mischungen, bevorzugt wässrige Zusammensetzungen, enthaltend Polymere gemäß den Ansprüchen 11 oder 12.

14. Verwendung von Polymeren gemäß Anspruch 11 oder 12 oder von wässrigen Zusammensetzungen gemäß Anspruch 13 als Betonverflüssiger, Netzmittel, in der Kosmetik, als Klebstoffbestandteil, in der Emulsionspolymerisation, zur Metalloberflächenbehandlung, in Beschichtungsanwendungen, in Lacken, in Waschmitteln, in Spülmitteln, als Verkapselungsmaterial oder Umhüllungsmaterial.

## Claims

1. A process for preparing a polymer comprising S-vinylthioalkanol as monomer by radical polymerization, which comprises carrying out the polymerization in aqueous solution, with the proviso that no N-vinylpyrrolidone is used as monomer for preparing the polymer, and wherein at least one further monomer, different from an S-vinylthioalkanol, is used, the further monomer being a monoethylenically unsaturated water-soluble monomer, with the exception of vinylpyrrolidone.

2. The process according to claim 1, wherein as S-vinylthioalkanol unsaturated compounds of the general formula (I) are used 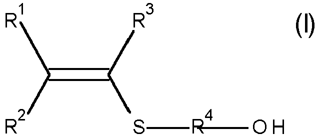 where
R¹, R², and R³ independently of one another, identically or differently, are H or CH₃ and
R⁴ is linear or branched C₁-C₃₀ alkylene.

3. The process according to claim 1 or 2, wherein the S-vinylthioalkanol is selected from the group consisting of S-vinyl-2-thioethan-1-ol, S-vinyl-2-thiopropan-1-ol, S-vinyl-1-thiopropan-2-ol, S-vinyl-2-thiobutan-1-ol, S-vinyl-1-thiobutan-2-ol, S-vinyl-2-thiopentan-1-ol, S-vinyl-1-thiopentan-2-ol, S-vinyl-2-thiocyclohexan-1-ol, S-vinyl-2-thio-(C₁₂-C₂₂)-1-ol, S-vinyl-1-thio-(C₁₂-C₂₂)-2-ol, S-vinyl-1-thiopropane-2,3-diol, S-vinyl-2-thiopropane-1,3-diol, 1-phenyl-S-vinyl-1-thioethan-2-ol, and 1-phenyl-S-vinyl-2-thioethan-1-ol.

4. The process according to claim 3, wherein at least one monomer is selected from the group consisting of monoethylenically unsaturated water-soluble monomer having one or more acid groups, monoethylenically unsaturated water-soluble monomer having one or more ester groups, monoethylenically unsaturated water-soluble monomer having one or more amide groups, monoethylenically unsaturated water-soluble monomer having one or more anhydride groups, monoethylenically unsaturated water-soluble monomer having one or more quaternized nitrogen groups, and monoethylenically unsaturated water-soluble monomer having one or more heteroaromatic groups.

5. The process according to claim 4, wherein as at least one monoethylenically unsaturated monomer acrylic acid is used.

6. The process according to claim 5, wherein besides S-vinyl-2-thioethan-1-ol and acrylic acid no further monomers are used.

7. The process according to claims 1 to 6, wherein the resultant polymer has an upper critical solution temperature in water of 0 to 99°C.

8. The process according to claims 1 to 7, wherein from 1 to 99 mol% of S-vinylthioalkanol is used, based on the total amount of monomers.

9. The process according to claims 3 to 7, wherein from 1 to 99 mol% of S-vinyl-2-thioethan-1-ol and from 99 to 1 mol% of further monomers are used, based on the total amount of monomers.

10. The process according to claim 6, wherein from 1 to 99 mol% of S-vinyl-2-thioethan-1-ol and from 99 to 1 mol% of acrylic acid is used, based on the total amount of monomers.

11. A polymer comprising S-vinylthioalkanol as monomer and at least one further monomer, different from an S-vinylthioalkanol, the further monomer being a monoethylenically unsaturated water-soluble monomer, with the exception of vinylpyrrolidone, prepared by a process according to claims 1 to 10.

12. A copolymer consisting of S-vinyl-2-thioethan-1-ol and one or more ethylenically unsaturated monomers selected from the group consisting of acrylic acid, itaconic acid, maleic acid, maleic anhydride, and vinylphosphonic acid.

13. A mixture, preferably aqueous composition, comprising polymer according to claim 11 or 12.

14. The use of polymer according to claim 11 or 12 or of aqueous composition according to claim 13 as concrete plasticizer, wetting agent, in cosmetics, as adhesive constituent, in emulsion polymerization, for metal surface treatment, in coating applications, in paints, in laundry detergents, in washing detergents, as encapsulating material or as enveloping material.

## Revendications

1. Procédé de fabrication de polymères contenant du S-vinylthioalcanol en tant que monomère par polymérisation radicalaire, **caractérisé en ce que** la polymérisation est réalisée dans une solution aqueuse, à condition que de la N-vinylpyrrolidone ne soit pas utilisée en tant que monomère pour la fabrication des polymères, et qu'au moins un monomère supplémentaire différent d'un S-vinylthioalcanol soit utilisé, le monomère supplémentaire étant un monomère soluble dans l'eau monoéthyléniquement insaturé, à l'exclusion de la vinypyrrolidone.

2. Procédé selon la revendication 1, **caractérisé en ce que** des composés insaturés de formule générale (I) sont utilisés en tant que S-vinylthioalcanol 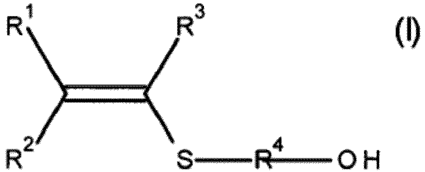 dans laquelle
R¹, R², R³ signifient indépendamment les uns des autres, de manière identique ou différente, H, CH₃,
R⁴ signifie alkylène en C₁-C₃₀ linéaire ou ramifié.

3. Procédé selon la revendication 1 ou 2, **caractérisé en ce que** le S-vinylthioalcanol est choisi dans le groupe constitué par le S-vinyl-2-thioéthan-1-ol, le S-vinyl-2-thiopropan-1-ol, le S-vinyl-1-thiopropan-2-ol, le S-vinyl-2-thiobutan-1-ol, le S-vinyl-1-thiobutan-2-ol, le S-vinyl-2-thiopentan-1-ol, le S-vinyl-1-thiopentan-2-ol, le S-vinyl-2-thiocyclohexan-1-ol, le S-vinyl-2-thio-(C₁₂-C₂₂)-1-ol, le S-vinyl-1-thio-(C₁₂-C₂₂)-2-ol, le S-vinyl-1-thiopropane-2,3-diol, le S-vinyl-2-thiopropane-1,3-diol, le 1-phényl-S-vinyl-1-thio-éthan-2-ol, le 1-phényl-S-vinyl-2-thioéthan-1-ol.

4. Procédé selon la revendication 3, **caractérisé en ce qu'**au moins un monomère est choisi dans le groupe constitué par un monomère soluble dans l'eau monoéthyléniquement insaturé contenant un ou plusieurs groupes acide, un monomère soluble dans l'eau monoéthyléniquement insaturé contenant un ou plusieurs groupes ester, un monomère soluble dans l'eau monoéthyléniquement insaturé contenant un ou plusieurs groupes amide, un monomère soluble dans l'eau monoéthyléniquement insaturé contenant un ou plusieurs groupes anhydride, un monomère soluble dans l'eau monoéthyléniquement insaturé contenant un ou plusieurs groupes azote quaternisé, un monomère soluble dans l'eau monoéthyléniquement insaturé contenant un ou plusieurs groupes hétéroaromatiques.

5. Procédé selon la revendication 4, **caractérisé en ce que** l'acide acrylique est utilisé en tant qu'au moins un monomère monoéthyléniquement insaturé.

6. Procédé selon la revendication 5, **caractérisé en ce qu'**aucun monomère supplémentaire n'est utilisé en plus du S-vinyl-2-thioéthan-1-ol et de l'acide acrylique.

7. Procédé selon les revendications 1 à 6, **caractérisé en ce que** les polymères formés présentent une température de dissolution critique supérieure dans l'eau de 0 à 99 °C.

8. Procédé selon les revendications 1 à 7, **caractérisé en ce que** 1 à 99 % en moles de S-vinylthioalcanol est utilisé, par rapport à la quantité totale de monomères.

9. Procédé selon les revendications 3 à 7, **caractérisé en ce que** 1 à 99 % en moles de S-vinyl-2-thioéthan-1-ol et 99 à 1 % en moles d'autres monomères sont utilisés, par rapport à la quantité totale de monomères.

10. Procédé selon la revendication 6, **caractérisé en ce que** 1 à 99 % en moles de S-vinyl-2-thioéthan-1-ol et 99 à 1 % en moles d'acide acrylique est utilisé, par rapport à la quantité totale de monomères.

11. Polymères contenant du S-vinylthioalcanol en tant que monomère et au moins un monomère supplémentaire différent d'un S-vinylthioalcanol, le monomère supplémentaire étant un monomère soluble dans l'eau monoéthyléniquement insaturé, à l'exception de la vinylpyrrolidone, fabriqués par le procédé selon les revendications 1 à 10.

12. Copolymère, constitué de S-vinyl-2-thioéthan-1-ol et d'un ou de plusieurs monomères éthyléniquement insaturés choisis dans le groupe constitué par l'acide acrylique, l'acide itaconique, l'acide maléique, l'anhydride de l'acide maléique et l'acide vinylphosphonique.

13. Mélanges, de préférence compositions aqueuses, contenant des polymères selon les revendications 11 ou 12.

14. Utilisation de polymères selon la revendication 11 ou 12 ou de compositions aqueuses selon la revendication 13 en tant qu'agent fluidifiant de béton, agent mouillant, dans la cosmétique, en tant que constituant adhésif, dans la polymérisation en émulsion, pour le traitement de surfaces métalliques, dans des applications de revêtement, dans des vernis, dans des détergents, dans des agents de rinçage, en tant que matériau d'encapsulation ou matériau d'enrobage.
